# EUROPEAN PATENT APPLICATION

(11) **EP 4 611 207 A1**
(43) Date of publication of application: **03.09.2025**
(21) Application number: 23882429.6
(22) Date of filing: 12.10.2023
(51) Int. Cl.: H02J 3/38, H02J 1/00, H02J 7/00, H02J 7/34

(54) **POWER GENERATION FACILITY AND POWER OUTPUT METHOD**

(30) Priority: 26.10.2022 JP 2022171614
(71) Applicant: Powerx, Inc., Tokyo, 107-6243 (JP)
(72) Inventor: SATO, Naoki, Tokyo 107-6243 (JP)
(74) Representative: Kuhnen & Wacker Patent- und Rechtsanwaltsbüro PartG mbB
(86) International application number: PCT/JP2023/037005
(87) International publication number: WO 2024/090221

(57) **Abstract**

Provided is a power generation facility used in a power transmission system that charges a storage battery mounted on a moving body with power generated by the power generation facility; and feeds power from the storage battery transported by the moving body to a power receiving facility. The power generation facility includes: a power generator; and a converter that converts alternating-current power generated by the power generator to direct-current power. The power generation facility is configured to transmit the direct-current power to an outside of the facility using a cable.

## Description

### TECHNICAL FIELD

The present invention relates to the technical field of power generation facilities and their power output methods.

### BACKGROUND ART

Conventionally, for offshore wind power generation systems, a power transmission cable is laid on the seabed or underwater, and electric power generated by an offshore power generation facility is transmitted to an onshore power system by means of the power transmission cable on the seabed.

For offshore wind power generation, there has been an increase in recent years in the development of power generation facilities not only in offshore areas where the distance to the shore is short but also in offshore areas where the distance to the shore is more than 50 km. The longer the distance to the shore, the more it is required to reduce the loss of power due to long-distance power transmission. For this reason, high-voltage direct-current cables are commonly used as power transmission cables on the seabed.

Patent Document 1 below discloses a system for transmitting power generated by wind power generation devices by means of a high-voltage direct-current cable.

### PRIOR ART DOCUMENT

### Patent Documents

Patent Document 1: Japanese Unexamined Patent Application Publication No. 2018-107980

### SUMMARY OF THE INVENTION

### Problems to Be Solved by the Invention

In the case of direct-current power transmission by means of a high-voltage direct-current cable, it is required to install a high-voltage output transformer to boost the voltage for suppressing the transmission loss. For this reason, for example, power generation facilities use transformers or other devices to boost the voltage of the generated power before transmitting it.

In addition, power generation facilities are required to adjust output according to the conditions of the power system on the receiving side, and for this purpose, the configuration of converting the generated power to direct current, adjusting it, converting it back to alternating current, and then boosting the voltage by means of a transformer, as described above, etc., is required. This makes the configuration of power generation facilities more complex. This also increases the cost of installing and operating power generation facilities.

Therefore, the present disclosure proposes a technology that enables to simplify the configuration of power generation facilities.

### Means for Solving Problems

A power generation facility according to the present invention is a power generation facility used in a power transmission system that charges a storage battery mounted on a moving body with generated power; and feeds power from the storage battery transported by the moving body to a power receiving facility. The power generation facility includes: a power generator; and an alternating current-direct current converter that converts alternating-current power generated by the power generator to direct-current power, and is configured to transmit the direct-current power to an outside of the facility using a cable.

In other words, for the power generated and transmitted for the purpose of charging the storage battery of the moving body, once converted from alternating current to direct current, the power is not converted back to alternating current but is transmitted to the outside of the power generation facility as direct current.

### Effects of the Invention

According to the present invention, the configuration of the power generation facility can be simplified, and the installation and driving costs of, for example, wind power generation facilities can be reduced.

### BRIEF DESCRIPTION OF DRAWINGS

FIG. 1 is a diagram illustrating a power transmission system according to an embodiment of the present invention.
FIG. 2 is a diagram illustrating the configuration of charging and discharging for a storage battery of an electricity carrier vessel according to the embodiment.
FIG. 3 is a diagram illustrating the power transmission system by means of a high-voltage direct-current cable as a comparative example.
FIG. 4 is a diagram illustrating the voltage level transition in the power transmission system according to the embodiment.

### MODES FOR CARRYING OUT THE INVENTION

An embodiment is described below in the following order.
<1. Configuration of a power transmission system according to the embodiment>
<2. Power transmission system by means of a high-voltage direct-current cable as a comparative example>
<3. Voltage level transition of the power transmission system according to the embodiment>
<4. Effects and variations of the embodiment>

### <1. Configuration of the power transmission system according to the embodiment>

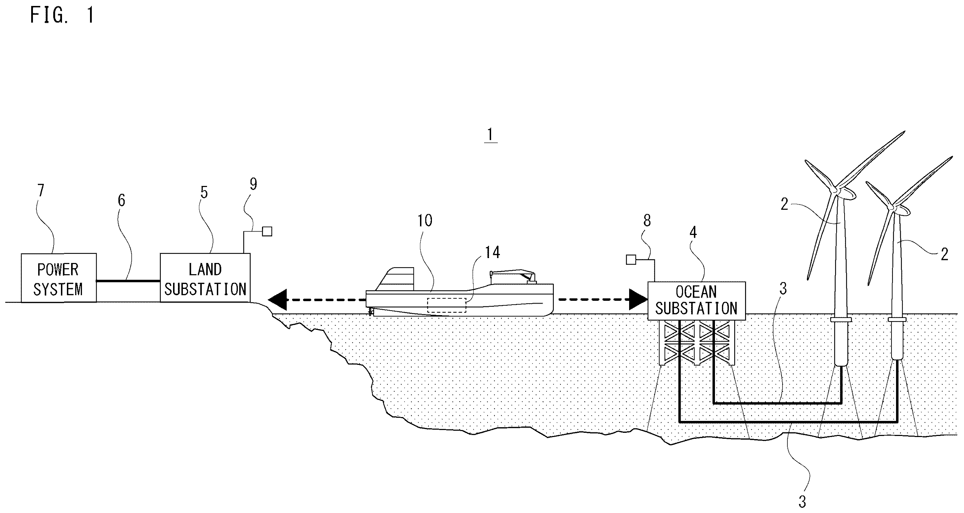

FIG. 1 illustrates an overview of a power transmission system 1 according to the embodiment. The figure illustrates major components of the power transmission system 1 including wind power generation facilities 2, array cables 3, an ocean substation 4, a land substation 5, a cable 6, a power system 7, connector cables 8 and 9, and an electricity carrier vessel 10.

The wind power generation facilities 2 are installed offshore. Although the offshore area is not particularly limited, in the case of this power transmission system 1, the wind power generation facilities 2 are also suitable for the installation in offshore areas where, for example, the distance to the shore is more than 50 km.

For example, one or more wind power generation facilities 2 are installed in a floating structure, and an ocean substation 4 is provided for one or more wind power generation facilities 2.

The alternating-current power generated by each of the wind power generation facilities 2 is converted to direct current, as described below. The power is then transmitted to the ocean substation 4 by means of the array cables 3 as direct-current cables.

The ocean substation 4 functions as an offshore substation having a facility to feed the power generated by the wind power generation facilities 2 to the electricity carrier vessel 10, which is a moving body.

The electricity carrier vessel 10 is a ship that is provided with a storage battery 14.

The ocean substation 4 has a facility to connect the connector cable 8 to the electricity carrier vessel 10. This allows the ocean substation 4 to feed power for charging the storage battery 14 of the electricity carrier vessel 10 based on the power generated by the wind power generation facilities 2.

Specifically, when the electricity carrier vessel 10 arrives near the ocean substation 4, the ocean substation 4 and the electricity carrier vessel 10 are electrically connected by means of the connector cable 8, and the power collected from the wind power generation facilities 2 to the ocean substation 4 is supplied to the electricity carrier vessel 10 via the connector cable 8 for charging. The electricity carrier vessel 10 uses this power to charge the storage battery 14.

After charging the storage battery 14, the electricity carrier vessel 10 navigates toward the land substation 5, which is a power receiving facility.

The land substation 5 has a facility to connect the connector cable 9 to the electricity carrier vessel 10. This allows the land substation 5 to receive the current discharged from the storage battery 14.

Specifically, when the electricity carrier vessel 10 arrives near the land substation 5, the land substation 5 and the electricity carrier vessel 10 are electrically connected by means of the connector cable 9, and the direct-current power is transmitted from the storage battery 14 to the land substation 5 via the connector cable 9. The land substation 5 converts the transmitted direct-current power to alternating current and transmits it to the power system 7 via the cable 6.

In this way, in the power transmission system 1 according to the embodiment, electric energy is transported from the offshore wind power generation facilities 2 to the land substation 5 by means of the electricity carrier vessel 10 that is provided with the storage battery 14. In other words, the power transmission system 1 allows the transmission of power from the offshore wind power generation facilities 2 to the power system 7 to be performed by means of a step of transporting the storage battery 14.

Although depending on the power source of the electricity carrier vessel 10, for example, the electricity carrier vessel 10 can navigate at sea for approximately 300 km to 500 km without being charged, even if it is a motor type electricity carrier vessel 10 that uses electricity as its power source. For this reason, the distance from the offshore wind power generation facilities 2 to the land substation 5 may be as far as 300 km to 500 km away.

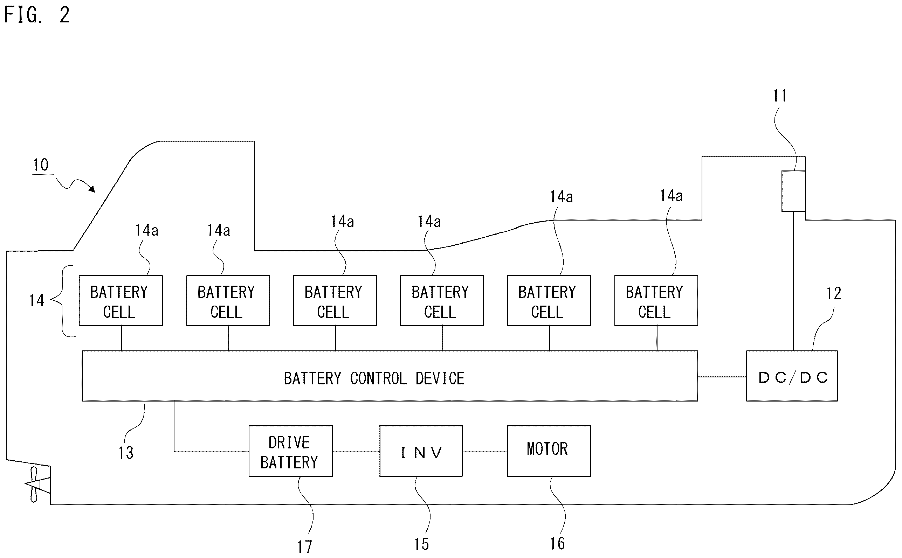

FIG. 2 illustrates the components that relate to the storage battery 14 of the electricity carrier vessel 10.

The electricity carrier vessel 10 is described here as a motor type that uses electricity as its power source. Note, however, that the electricity carrier vessel 10 may be an internal combustion engine type that uses fossil fuel as its power source or a hybrid type that uses both a motor and an internal combustion engine. In addition, the electricity carrier vessel 10 may be one that uses hydrogen as its power source. For example, when hydrogen is used as a power source, the electricity carrier vessel 10 may be a fuel-cell type that drives a motor with electricity generated by a fuel cell or a hydrogen-engine type that is powered by combusting hydrogen in an internal combustion engine.

The electricity carrier vessel 10 has a charging and discharging port 11, a DC/DC converter 12, and a battery control device 13 as components that directly relate to the storage battery 14. The storage battery 14 consists of a plurality of battery cells 14a.

The charging and discharging port 11 is an interface for charging and discharging each of the battery cells 14a, to which the connector cables 8 and 9 described above can be connected and disconnected for charging and discharging.

The DC/DC converter 12 receives direct-current voltage fed from the charging and discharging port 11 and converts the voltage.

The battery control device 13 is connected to each of the battery cells 14a and is provided with a circuit that charges and discharges each of the battery cells 14a, as well as a control circuit that controls the amount of charge, the amount of discharge, the charging speed, and the discharging speed.

Specifically, the battery control device 13 includes a charging and discharging circuit for each of the battery cells 14a, a microprocessor, a memory that stores a control program, a communication circuit that communicates with an external device, a sensor for detecting the state of charge, etc., of the battery cells 14a, and other components.

When the electricity carrier vessel 10 is connected to the connector cable 8 of the ocean substation 4, the battery control device 13 charges the battery cells 14a based on the direct-current voltage that is subjected to voltage conversion by the DC/DC converter 12.

When the electricity carrier vessel 10 is connected to the connector cable 9 of the land substation 5, the battery control device 13 controls the discharge from the battery cells 14a. The discharged direct-current voltage is subjected to voltage conversion by the DC/DC converter 12 and is transmitted out from the connector cable 9 to the land substation 5.

Note that the components of the charging and discharging port 11, the DC/DC converter 12, the battery control device 13, and the storage battery 14 described above may be provided in a container that is attachable to and detachable from the body of the vessel. This enables, for example, the storage battery 14 to be charged by detaching the container from the body of the vessel and transporting it to the ocean substation 4. Conversely, for example, the storage battery 14 can be discharged by detaching the container from the body of the vessel and transporting it to the land substation 5 (transmission of power to the land substation 5).

The electricity carrier vessel 10 has the same configuration as, for example, a common motor-type ship that uses electricity as its power source. Specifically, the electricity carrier vessel 10 includes a drive battery 17, an inverter 15, a motor 16, and other components.

The drive battery 17 holds the electricity that is consumed as a power source for the electricity carrier vessel 10 and its internal devices.

The inverter 15 controls or converts the electricity output from the drive battery 17 and supplies it to the motor 16.

The motor 16 converts the electricity that it receives from the inverter 15 to power. For example, the motor 16 rotates a screw propeller through a shaft, which is not shown in the figure, so that the electricity carrier vessel 10 obtains its propulsive force.

In this way, the electricity carrier vessel 10 can navigate without consuming the electricity stored in the storage battery 14 (battery cells 14a) because it has the drive battery 17 separately from the storage battery 14, which stores electricity to be transported.

Note, however, that in the example shown in the figure, the drive battery 17 is electrically connected to the battery cells 14a via the battery control device 13. This allows the electricity in the battery cells 14a to be supplied to the drive battery 17 in an emergency or other situations. In other words, the electricity carrier vessel 10 can also navigate using the electricity in the battery cells 14a as a power source.

### <2. Power transmission system by means of the high-voltage direct-current cable as a comparative example>

As described above, the power transmission system 1 according to the present embodiment transmits power by means of the electricity carrier vessel 10. Before describing the voltage level transition in the power transmission system 1, a power transmission system 201 by means of a high-voltage direct-current cable is described for comparison.

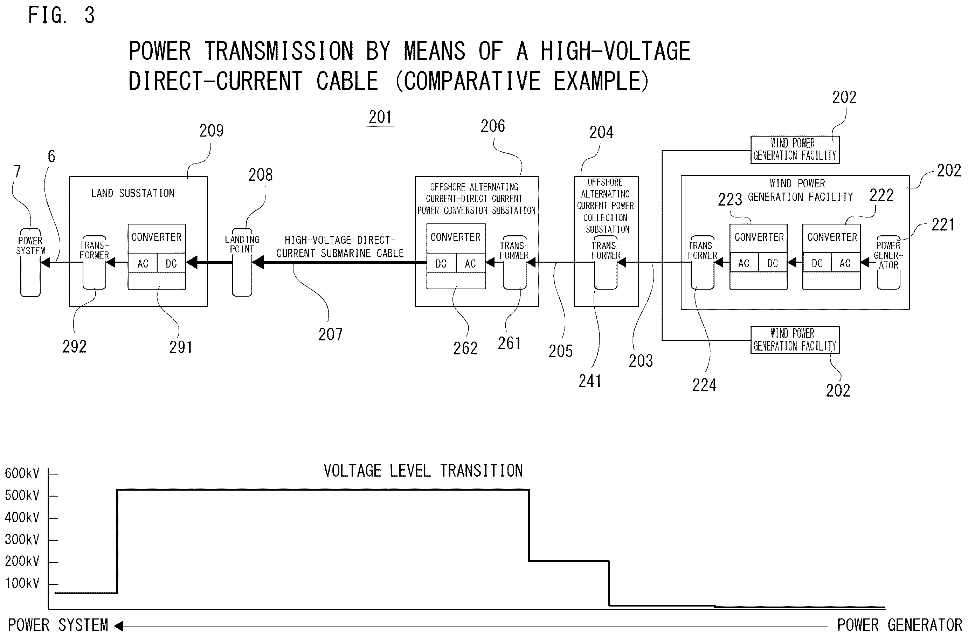

FIG. 3 illustrates the configuration for voltage conversion and the voltage level transition in the power transmission system 201 by means of a high-voltage direct-current cable.

This power transmission system 201 collects the power generated by offshore wind power generation facilities 202 at an offshore alternating-current power collection substation 204, further boosts the voltage and converts it to direct current at an offshore alternating current-direct current power conversion substation 206. Power is then transmitted by means of a high-voltage direct-current submarine cable 207.

The transmitted power is transmitted from a landing point 208 to a land substation 209, and then to the power system 7.

In this power transmission system 201, alternating-current power of approximately 300 V is extracted from a power generator 221 in the wind power generation facilities 202. The power is then converted to direct current by means of an AC/DC converter 222. The power is further converted to alternating current by means of a DC/AC converter 223, then boosted to approximately 3 kV by means of a transformer 224, and transmitted out to an array cable 203, which is an alternating-current cable.

In this wind power generation facilities 202, the AC/DC converter 222 and the DC/AC converter 223 convert the power once to direct current and then back to alternating current, which is for operating the wind turbine at variable speed (to adjust power output). In the case of the power transmission system 201, the power generator 221 through the power system 7 always stays connected. For this reason, output adjustment is required according to the power demand and other conditions on the power system 7 side, and this adjustment needs to be performed by means of controlling the power as direct current.

The transformer 224 is provided to obtain the boosted alternating current for power transmission by means of the array cable 3. Boosting the voltage by the transformer 224, together with the transformers 241 and 261 in the subsequent stages, also aims to provide a step-by-step boost up to the high-voltage direct-current submarine cable 207.

The alternating-current power transmitted by means of the array cable 203 to the offshore alternating-current power collection substation 204 is further boosted to approximately 200 kV by means of the transformer 241 and then transmitted by means of a cable 205 to the offshore alternating current-direct current power conversion substation 206.

The power is boosted to 500 kV or higher by means of the transformer 261 at the offshore alternating current-direct current power conversion substation 206, then converted to direct current by means of the AC/DC converter 262, and transmitted by means of the high-voltage direct-current submarine cable 207.

The direct-current power transmitted by means of the high-voltage direct-current submarine cable 207 is converted to alternating current at the land substation 209 by means of a DC/AC converter 291 and is stepped down to, for example, 66 kV by means of a transformer 292. This alternating-current power of 66 kV is transmitted out to the power system 7.

In such a power transmission system 201, the voltage level is transitioning as shown in the lower part of the figure through the course of the power transmission process. In particular, in the transmission stage in the high-voltage direct-current submarine cable 207, the voltage is set to be extremely high, 500 kV or higher. The reason for using a high voltage is to reduce losses, especially when transmitting power over a long distance by means of a cable. However, the use of this high voltage requires the configuration of multi-stage transformers, high withstand voltage devices, components, cable structures, etc.

In addition, as described above, the wind power generation facilities 202 have a more complex configuration to convert the power once to direct current using the AC/DC converter 222 and the DC/AC converter 223 before transmitting it out to the array cable 203, and then convert it back to alternating current for adjusting the output.

### <3. Voltage level transition of the power transmission system according to the embodiment>

Based on the description above, the voltage level transition in the power transmission system 1 according to the present embodiment is described below.

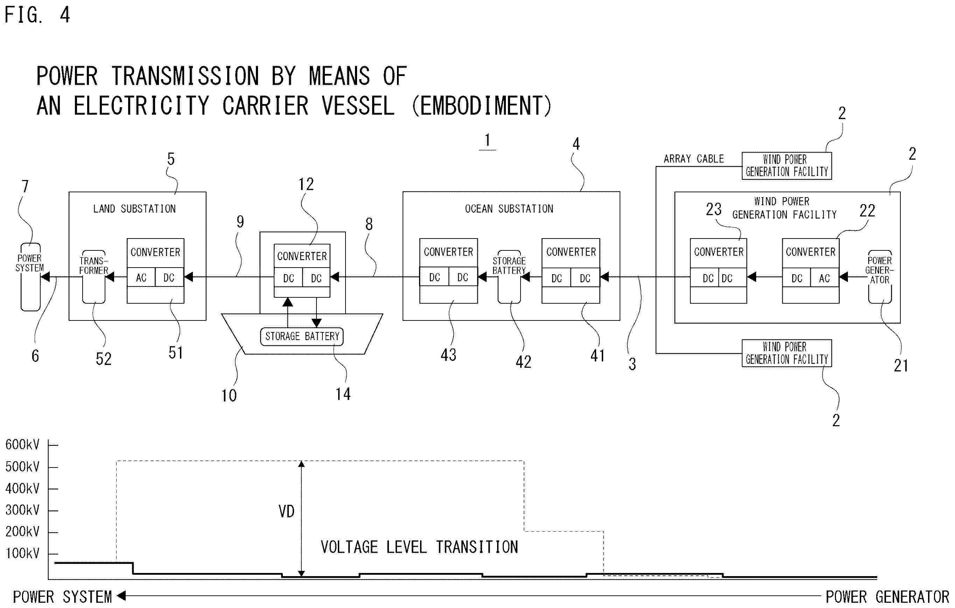

FIG. 4 illustrates the configuration for voltage conversion and the voltage level transition in the power transmission system 1 that uses the electricity carrier vessel 10. Note that in the voltage level transition shown in the lower part of FIG. 4, the solid line represents the voltage level transition in the power transmission system 1, and for comparison, the dashed line represents the voltage level transition in the power transmission system 201 shown in FIG. 3. Note that the values of the voltages mentioned in the following description are examples for explanatory purposes only.

In the power transmission system 1 according to the embodiment, with a power generator 21 of the wind power generation facility 2, alternating-current power of its rated voltage or lower (for example, approximately 300 V to 6600 V) is generated and extracted by means of an AC/DC converter 22 as direct current.

The power is converted to direct current of approximately 10 kV by means of a DC/DC converter 23 and then transmitted out to the array cable 3, which is configured as a direct-current cable. This DC/DC converter 23 is provided for the purpose of boosting the voltage level by a certain degree to reduce the transmission loss at the array cable 3, which is a submarine cable, when transmitting power.

In this way, in the wind power generation facilities 2, the power is transmitted to the outside of the facilities only by boosting the voltage to match the transmission with the array cable 3 in the form of direct current as it is after being converted to direct current by means of the AC/DC converter 22.

In addition, in the case of the power transmission system 1, since the wind power generation facilities 2 and the power system 7 are not connected, output adjustment according to the situation on the power system 7 side is not required.

Note that the wind power generation facility 2 in the present disclosure refers to the configuration from the power generator 21 to immediately before the array cable 3 that transmits power to the ocean substation 4. The array cable 3 and thereafter are outside the wind power generation facility 2.

The figure illustrates three wind power generation facilities 2, although the number of three is an example for explanatory purposes only. The figure illustrates one wind power generation facility 2 including the AC/DC converter 22 and the DC/DC converter 23, while other wind power generation facilities 2 are configured in the same way.

The direct-current power transmitted to the ocean substation 4 by means of the array cable 3 is stepped down to approximately 1.5 kV by means of a DC/DC converter 41. Then, based on the stepped-down voltage, a charging current flows from a charging circuit, which is not shown in the figure, to a storage battery 42 to charge it. This storage battery 42 is for storing the power generated by the wind power generation facilities 2 during the period when the electricity carrier vessel 10 is not arriving at the ocean substation 4.

When the electricity carrier vessel 10 arrives at the ocean substation 4 and the connector cable 8 is connected to it, power is transmitted (discharged) out from the storage battery 42. In this process, the voltage of direct current at the time of power transmission is converted by means of the DC/DC converter 43 to a voltage set according to the rated voltage of the connector cable 8, the transmission efficiency of the cable, etc., for example, approximately 10 kV. This is also a voltage boost to reduce the transmission loss at the connector cable 8.

In the electricity carrier vessel 10, the connector cable 8 is connected to the charging and discharging port 11, and the voltage of the power received from the connector cable 8 is stepped down to, for example, approximately 1.5 kV by means of the DC/DC converter 12. Then, based on the stepped-down voltage, a charging current flows to the storage battery 14 (battery cells 14a) by means of the charging circuit in the battery control device 13 to charge it.

After charging, the electricity carrier vessel 10 navigates toward the land substation 209. When the electricity carrier vessel 10 arrives at the land substation 209, the connector cable 9 is connected to transmit power (discharging) out from the storage battery 14. In this process, the voltage of direct current at the time of power transmission is converted by means of the DC/DC converter 12 to a voltage set according to the rated voltage of the connector cable 9, the transmission efficiency of the cable, etc., for example, approximately 10 kV.

The direct-current power transmitted by means of the connector cable 9 is converted to alternating current at the land substation 5 by means of a DC/AC converter 51 and is boosted to, for example, 66 kV by means of a transformer 52. This alternating-current power of 66 kV is transmitted out to the power system 7.

In such a power transmission system 1, the transmitted power shows transition at low voltage levels through the course of the power transmission process, as shown in the lower part of the figure. The voltage difference, particularly when compared to the stage of the high-voltage direct-current submarine cable 207 and the storage battery 14, is significant, as shown as a voltage difference VD. For this reason, the power transmission system 1 does not require the configuration of multi-stage transformers, high withstand voltage devices, components, cable structures, etc., in contrast to the power transmission system 201.

The electricity carrier vessel 10 is also preferably capable of transporting as large a capacity of power as possible in a single navigation, considering the efficiency of power transmission. Meanwhile, in view of the handling of cables for charging and discharging power systems in the periphery of the storage battery 14 and the battery control device 13 on the electricity carrier vessel 10, using fewer and smaller cables is preferable. Considering these factors, the voltage is preferably set to approximately 1.5 kV via the DC/DC converter 12.

### <4. Effects and variations of the embodiment>

The power transmission system 1 according to the embodiment described above provides the following effects.

The electricity carrier vessel 10, which is the moving body in the power transmission system 1, is provided with the battery control device 13 that allows the storage battery 14 to be charged by supplying power based on a voltage value that does not reach the maximum voltage value of direct-current power between the wind power generation facilities 2 and the land substation 209, which is the power receiving facility. In other words, the charging voltage to the storage battery 14 mounted on the electricity carrier vessel 10 is set at a predetermined voltage that is lower than the maximum voltage value of the power between the wind power generation facilities 2 and the land substation 209. For example, in the example shown in FIG. 4, the voltage in the stage of charging and discharging the storage battery 14 is lower than the voltage during transmission by means of the array cable 3 and the connector cables 8 and 9.

This means that the power transmission system 1 replaces the transmission of power by means of the high-voltage direct-current submarine cable 207 as in the power transmission system 201 of the comparative example with the transmission of power by means of the electricity carrier vessel 10 and is designed as a system so that the voltage at the time of charging does not reach the maximum voltage value. Such a design is possible because no voltage boost is required to suppress the transmission loss at the high-voltage direct-current submarine cable 207. This can also eliminate the need for high-voltage compatible devices in the periphery of the storage battery 14 of the electricity carrier vessel 10.

These factors can simplify the configuration and reduce costs in the power transmission system 1.

The electricity carrier vessel 10 is also provided with the DC/DC converter 12 as a conversion section that receives the power generated by the wind power generation facilities 2 and converted to a first direct-current voltage (for example, a voltage of approximately 10 kV) and converts it to a second direct-current voltage (for example, a voltage of approximately 1.5 kV) that is lower than the first direct-current voltage. The battery control device 13 then allows the storage battery 14 to be charged by supplying power at the second direct-current voltage.

In other words, the electricity carrier vessel 10 is configured to charge the storage battery 14 by converting the power to a voltage that is lower than the direct-current voltage supplied from the ocean substation 4, which is a relay facility. This allows the storage battery 14 to be charged at a voltage that is at least lower than the voltage at the time of the transmission by means of the connector cable 8.

No need for high voltage to charge the storage battery 14 eliminates the need for a significant voltage boost in the system, as in the power transmission system 201 that uses the high-voltage direct-current submarine cable 207 of the comparative example. This means that the use of high voltage for the transmission medium when transmitting power over a long distance is no longer necessary. This can eliminate the need for high-voltage compatible devices, cables, etc., promoting higher efficiency and cost reduction in the overall system configuration.

The embodiment provides an example of the power transmission system 1 being configured by means of a ship represented as the electricity carrier vessel 10. This makes power generation preferable not only in onshore and coastal areas but also in offshore areas that are relatively far from land.

For example, the power transmission system that realizes the improved efficiency of the configuration described above can be established while enjoying the advantages of not requiring a long-distance direct-current submarine cable, eliminating noise and other problems resulting from power generation, etc.

The moving body that is applicable to the power transmission system according to the invention of the present disclosure is not limited to a ship but is also envisioned to be a vehicle, an aircraft, etc., that are provided with a storage battery.

In the embodiment, an example of applying the power transmission system 1 of the present disclosure is described with respect to the offshore wind power generation facilities 2. This makes power generation preferable not only in onshore and coastal areas but also in offshore areas where the distance to the shore is long. This allows the power transmission system that realizes the improved efficiency of the configuration described above to be established while enjoying the advantages of improved power generation efficiency by means of stable offshore winds.

Note that the power generation facility according to the invention of the present disclosure is not limited to a wind power generation facility but also includes solar power generation facilities, tidal power generation facilities, geothermal power generation facilities, hydroelectric power generation facilities, biomass power generation facilities, etc.

The power generation facility according to the invention of the present disclosure is not limited to an offshore facility but may also be an onshore facility. For example, it may be a power transmission system between an onshore power generation facility and an onshore power receiving facility. The invention of the present disclosure can also be applied to a power transmission system between an offshore power generation facility and an offshore power receiving facility.

The wind power generation facility 2, which is the power generation facility in the power transmission system 1 according to the embodiment, includes the power generator 21 and the alternating current-direct current converter (AC/DC converter 22) that converts the alternating-current power generated by the power generator 21 to direct-current power, and is configured to transmit the direct-current power to the outside of the facility using the array cable 3. In other words, for the power generated and transmitted for the purpose of charging the storage battery 14 of the electricity carrier vessel 10, once converted from alternating current to direct current, the power is not converted back to alternating current but is transmitted to the outside of the power generation facility as direct current.

In the case of the power transmission system 1, since the wind power generation facilities 2 and the power system 7 are not constantly connected by utilizing the electricity carrier vessel 10, output adjustment on the wind power generation facilities 2 side is not required. This means that there is no need to convert the generated power to direct current in the wind power generation facilities 2, adjust the output, and then convert it back to alternating current to output the power to the outside of the facilities.

In addition, in the case of the power transmission system 1, the array cable 3 transmits power as direct current. Incorporating the electricity carrier vessel 10 in the power transmission system 1 by means of offshore wind power generation makes it possible to adopt a direct-current extraction method for the extraction from the offshore wind power generation facilities 2, and the power converted from alternating current to direct current can be transmitted out either as is or after the necessary voltage conversion. For the wind power generation facilities 2, these factors eliminate the need for the DC/AC converter 223 and the transformer 224 as in the wind power generation facilities 202 of the comparative example. The use of the array cable 3, which is a direct-current cable, instead of the array cable 203, which is an alternating-current cable, replaces a three-core cable with a two-core cable. This can significantly reduce the cost required for the array cable 3.

These factors can simplify the configuration of power generation facilities and reduce the installation and driving costs of, for example, the wind power generation facilities 2.

The array cable 3 was described as a direct-current transmission line to the ocean substation 4, which is a relay facility feeding power to the electricity carrier vessel 10. The array cable 3 is configured as a direct-current cable to transmit direct-current power to the ocean substation 4, which is located relatively close to the facilities. Providing the ocean substation 4, which is a relay facility, eliminates the need to provide a connection mechanism with the electricity carrier vessel 10 in the wind power generation facilities 2 themselves. This can promote the simplification of the configuration of the wind power generation facilities 2 that are installed in large numbers.

When transmitting power out to the array cable 3, the direct-current voltage converter (DC/DC converter 23) converts the voltage to an appropriate value, thereby enabling power to be transmitted to the ocean substation 4 with a small loss.

Note that although FIG. 4 illustrates an example of using the DC/DC converter 23 as a direct-current voltage converter, a transformer may be used instead of the DC/DC converter 23. In particular, in the case where insulation is required in the stage of power transmission out from the wind power generation facilities 2, the use of a transformer to convert the voltage as required is preferable.

### DESCRIPTION OF REFERENCE NUMERALS

- 1: power transmission system
- 2: wind power generation facility
- 3: array cable
- 4: ocean substation
- 5: land substation
- 6: cable
- 7: power system
- 8 and 9: connector cable
- 10: electricity carrier vessel
- 11: charging and discharging port
- 12, 23, 41, and 43: DC/DC converter
- 13: battery control device
- 14: storage battery
- 14a: battery cell
- 21: power generator
- 22: AC/DC converter
- 42: storage battery
- 51: DC/AC converter
- 52: transformer

## Claims

1. A power generation facility used in a power transmission system that charges a storage battery mounted on a moving body with power generated by the power generation facility; and feeds the power from the storage battery transported by the moving body to a power receiving facility, the power generation facility comprising:
a power generator; and
an alternating current-direct current converter that converts alternating-current power generated by the power generator to direct-current power, wherein
the direct-current power is transmitted to an outside of the facility using a cable.

2. The power generation facility according to claim 1, wherein
the power generation facility is configured as a wind power generation facility installed offshore.

3. The power generation facility according to claim 1 or claim 2, wherein
the cable is a direct-current transmission line to a relay facility that feeds power to the moving body.

4. The power generation facility according to claim 1 or claim 2, comprising
a direct-current voltage converter that converts a voltage value of direct-current voltage that is output of the alternating current-direct current converter to a voltage value corresponding to the cable.

5. A power output method of a power generation facility used in a power transmission system that charges a storage battery mounted on a moving body with power generated by the power generation facility; and feeds power from the storage battery transported by the moving body to a power receiving facility, wherein
alternating-current power generated by a power generator is converted to direct-current power, and then the power is transmitted to an outside of the facility using a cable in the form of direct current.
